Europäisches Patentamt

European Patent Office (11) Veröffentlichungsnummer: **0 051 713**

Office européen des brevets **B1**

(12) # EUROPÄISCHE PATENTSCHRIFT

(45) Veröffentlichungstag der Patentschrift:
15.10.86

(51) Int. Cl.⁴: **F 24 D 3/12, E 04 B 1/80**

(21) Anmeldenummer: **80890133.4**

(22) Anmeldetag: **12.11.80**

(54) **Niedertemperatur-Wandheizung.**

(43) Veröffentlichungstag der Anmeldung:
**19.05.82 Patentblatt 82/20**

(45) Bekanntmachung des Hinweises auf die Patenterteilung:
**15.10.86 Patentblatt 86/42**

(84) Benannte Vertragsstaaten:
**BE CH DE FR GB LI NL SE**

(56) Entgegenhaltungen:
**CH-A-250 846
DE-A-2 221 533
DE-A-2 832 961
DE-U-8 010 639
FR-A-2 430 569
US-A-4 145 852**

**Patents Abstracts of Japan, Band 1, Nr. 82, 29. Juli
1977, Seite 1750M77**

(73) Patentinhaber: **Eggert, Heinz, Moosstrasse 11,
A-5020 Salzburg (AT)**
Patentinhaber: **Margreiter, Gerhard,
Pabensteinerstrasse 5, A-5400 Hallein (AT)**

(72) Erfinder: **Eggert, Heinz, Moosstrasse 11, A-5020
Salzburg (AT)**
Erfinder: **Margreiter, Gerhard, Pabensteinerstrasse
5, A-5400 Hallein (AT)**

(74) Vertreter: **Itze, Peter, Dipl.- Ing., Patentanwälte
Dipl.- Ing. Leopold Friebel Dipl.- Ing. Peter Itze
Zieglergasse 57/11, A-1070 Wien (AT)**

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

## Beschreibung

Die Erfindung betrifft eine als Wärmetauscher wirkende, selbsttragende Wandplatte für mit flüssigem Wärmeträger betriebene Wandheizung, wobei in die, eine isolierende Rückseite aufweisende Wandplatte wenigstens eine vom Wärmeträger durchflossene Rohrschlange eingebettet ist.

Bei der Ausbildung gemäß der FR-A-2 430 569 ist in der Wandplatte eine vom Träger durchflossene Rohrschlange eingebaut, wobei zum Anschluß der Rohrschlange an die Sammelrohre an der oberen und an der unteren Kante der Wandplatte je ein Kupplungsstück herausragt, mit welchem die Verbindung der Rohrschlange mit dem zugehörigen Sammelrohr hergestellt werden muß. Derartige Wandplatten haben den Nachteil, daß bei der Montage sehr vorsichtig vorgegangen werden muß, um Beschädigungen der meist dünnwandigen Rohrschlange vorzubeugen. Weiters müssen die Anschlüsse an den Sammelrohren sehr genau angeordnet werden, um ein paßgenaues Aufstellen der Wandplatten zu erzielen, wobei überdies der Nachteil vorhanden ist, daß die Wandplatten nicht vom Boden bis zur Decke reichen können, da sonst kein Anschluß an die Sammelrohre möglich ist. Die Wandplatten können sich somit bei der Montage nicht am Boden abstützen, weshalb von den schwachen Anschlüssen der Rohrschlange an den Sammelrohren erhebliche Kräfte aufgenommen werden müssen, was dann erhebliche Stütz- und Trageorgane erforderlich macht.

Bei der Ausbildung gemäß der DE-A-2 832 961 handelt es sich um einen Heizkörper für Warmwasserheizungen, bei welchem die Rohrschlange in einen zur Gänze von Wärmeträgermedium durchflossenen Rahmen aus Vierkantrohr eingesetzt ist. Auf diesen Rahmen ist dann raumseitig eine Metallplatte aufgesetzt, welche die erheblichen Distanzänderungen der Sammelrohre durch ihr gleiches Wärmedehnverhalten mitmachen kann. Auf derartige Metallverkleidungsplatten können jedoch Ziergegenstände oder Fliesen u.s.w. nur mit Schwierigkeiten angebracht werden. Außerdem ist ein Verputzen der bekannten Ausbildung nur sehr schwer möglich, wodurch, z.B. auch beim Einfassen von mit der Heizplatte umrandeten Fenstern, erhebliche Schwierigkeiten auftreten. Überdies erfolgt die Wärmeübertragung von den Rohrschlangen auf die dem Raum zugewandte Strahlungsfläche überwiegend durch Konvektion und Strahlung und nur zum geringen Teil durch Wärmeleitung. Auch ist nur eine begrenzte Speicherfähigkeit gegeben, was zu einer ungleichmäßigen Wärmeabgabe zwischen den Heizintervallen führt. Weiters ist zufolge der starken Wärmedehnung des Metalls eine spezielle Verblendung von etwaigen unbeheizten Blindflächen erforderlich, damit diese Dehnungsbewegungen kompensiert werden können. Die Metallplatte weist überdies nur eine geringe Dicke auf, was zu einer mangelnden Druckfestigkeit führt, wobei die Reparaturfähigkeit hinsichtlich etwaiger Dellen nur schwer möglich ist, da man, mangels Zugänglichkeit, die Metallplatte von der Rückseite her nicht ausrichten kann. Dabei ist auch die Reparaturfähigkeit von undichten Rohrschlangen sehr schlecht, da dazu die gesamte Abdeckplatte zerstört werden muß, zumal ja die Schadenstelle von außen her nicht ermittelt werden kann. Außerdem zeigt die Metallabdeckplatte bei Beschallung eine hohe Resonanzneigung und bringt Störungen elektrischer Felder mit sich. Schließlich neigt die Abdeckplatte bei Nichtbetrieb der Heizung zur Kondensatbildung, da die Abdeckplatte keine Feuchtigkeit, z.B. in Küche oder Bad, absorbiert, wodurch etwa aufgebrachte Tapeten durchnäßt werden. Dies verhindert auch die Verwendung des Heizkörpers als Kühlorgan für die Raumklimatisierung, wobei in diesem Fall auftretendes Kondensat an der Rohrschlange ablaufen und zu Korrosionen an der Anschlußstelle führen kann.

Der Erfindung liegt die Aufgabe zugrunde, unter Vermeidung der Nachteile der bekannten Ausbildungen eine Wandplatte der eingangs genannten Art zu schaffen, welche eine spezifische Heizleistung aufweist, die hoch genug ist, um bei einem durchschnittlichen Verhältnis von Außenwandfläche zu Fensterfläche eine Außenwandheizung zu realisieren.

Erfindungsgemäß wird diese Aufgabe dadurch gelöst, daß in die Wandplatte zusätzlich horizontale Sammelrohre eingebettet sind, welche seitliche Rohrkupplungen aufweisen und mit den Rohrschlangen unlösbar verbunden sind, wobei die Sammelrohre untereinander innerhalb der Wandplatten frei von direkten vertikalen, von Wärmeträgern durchflossenen Verbindungsrohren sind, und wobei in der Wandplatte zusätzlich von den Sammelrohren und den Rohrschlangen gesonderte mechanische Träger, z.B. ein Flächentragwerk, vorgesehen sind.

Vorteilhafterweise können als Flächentragwerk orientierungslos verteilt angeordnete Fasern in das Plattenmaterial eingebettet sein. Es kann aber das Flächentragwerk durch ein- oder beidseits der Rohrschlangen und der Sammelrohre in das Plattenmaterial eingebettete netzartige Träger gebildet sein. Weiters können die Rohrschlangen zickzackartig verlaufend und ineinandergreifend ausgebildet sein. Dazu kann die Rohrschlange in die Isolierung der Wandplatte reichende und dort verankerte Haltebügel aufweisen. Schließlich kann die Verbindungszone zwischen Sammelrohr und Rohrschlange eine bis zum Bogenteil der Rohrschlange reichende Abdeckung aufweisen.

Die Erfindung wird nachstehend an Hand der Zeichnung näher erläutert. Es zeigt

Fig. 1 eine Vorderansicht eines Ausführungsbeispieles der erfindungsgemäßen Wandplatte, wobei der vor der Rohrschlange liegende Teil der Platte weggelassen ist.

Fig. 2 einen Querschnitt durch den oberen Teil der erfindungsgemäßen Wandplatte in größerem Maßstab.

Fig. 3 einen schematischen Verlegeplan der Rohrschlangen an einer Fensterwand.

Fig. 4 eine Detaildarstellung des Verbindungsbereiches zwischen Rohrschlange und Sammelrohr in größerem Maßstab.

Fig. 5 einen Querschnitt durch den Verbindungsbereich, ebenfalls in größerem Maßstab.

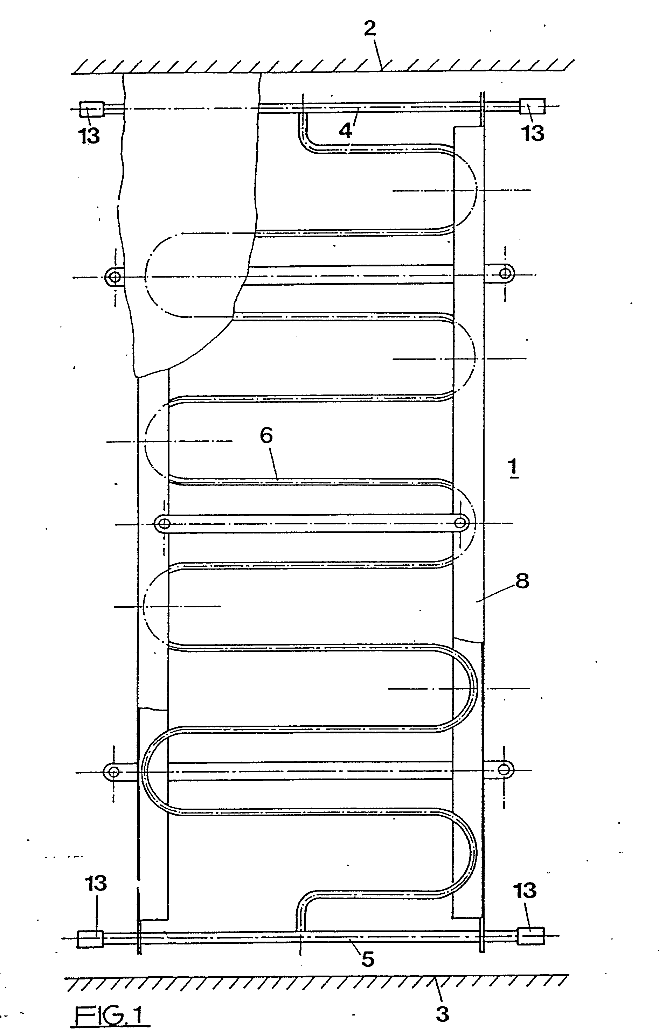

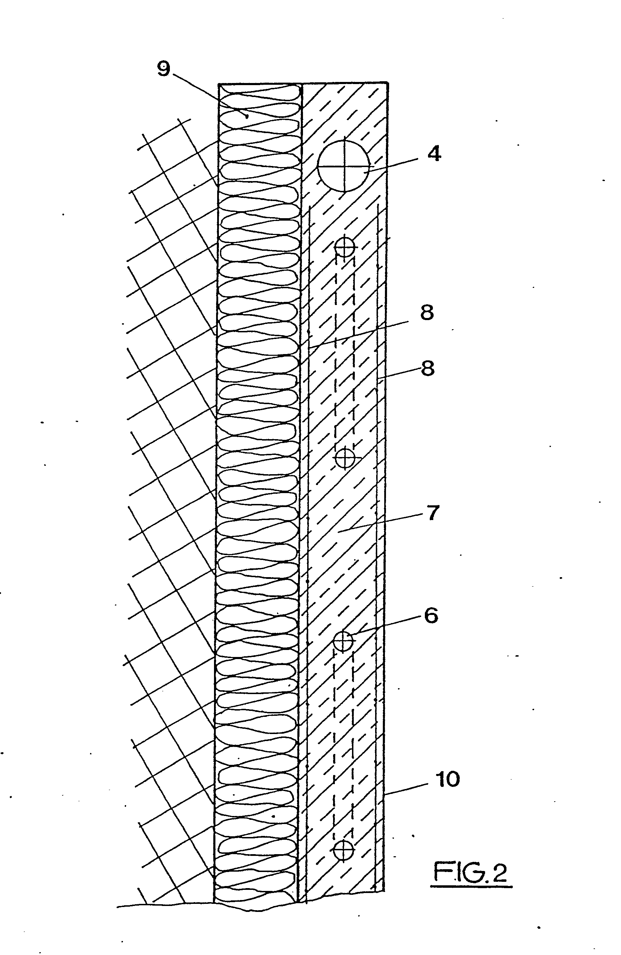

Mit 1 ist eine Gebäudewand an welcher die erfindungsgemäße Wandplatte anzubringen ist mit 2 Raumdecke und mit 3 der Fußboden bezeichnet. Vor der Gebäudewand 1 ist eine erfindungsgemäße Wandplatte befestigt, welche im oberen Randbereich und im unteren Randbereich parallel zum Rand verlaufende Sammelrohre 4, 5 aufweist, an die eine oder mehrere Rohrschlangen 6 unlösbar angeschlossen sind. Die Sammelrohre 4, 5 und die Rohrschlangen 6 sind in das Plattenmaterial 7 eingebettet, u.zw. zusammen mit mechanischen Trägern 8, welche gemäß Fig. 1 als Profilträger, oder gemäß Fig. 2, 4 und 5 als netzartige Träger ausgebildet sind. Es könnten jedoch auch in nicht dargestellter Weise im Plattenmaterial orientierungslos verteilt angeordnete Fasern als Träger vorgesehen sein. An der der Gebäudewand i zugekehrten Fläche der Wandplatte ist eine Isolierschicht 9 vorgesehen. An der dem Raum zugewandten Oberfläche 10 können Holzplatten, Gipsplatten, Tapeten und sonstige Wandbeläge angebracht werden.

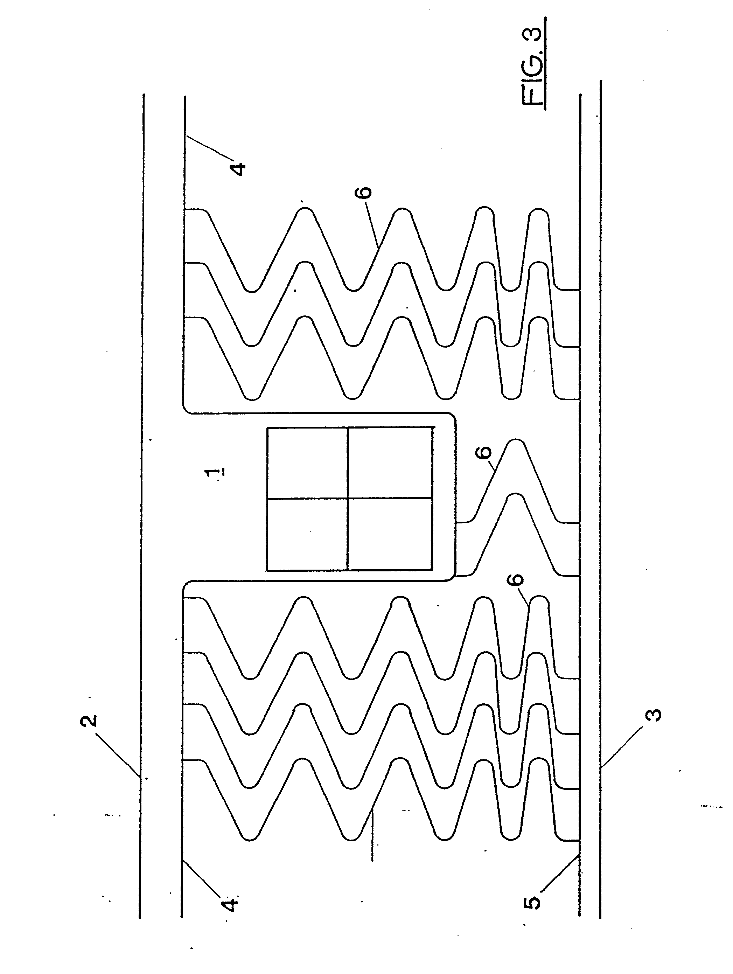

Wie aus Fig. 3 ersichtlich, sind zwischen dem oberen Sammelrohr 4 und dem unteren Sammelrohr 5 hydraulisch parallelgeschaltete Scharen zick-zackförmig verlaufender Rohrschlangen 6 angeordnet, die im Bereich des Bodens 3 teilungsmäßig gestaucht und im Bereich der Decke 2 teilungsmäßig gestreckt sind. Damit wird eine zweckmäßige Heizleistungsverteilung mit höherer Heizleistung nahe dem Fußboden 3 erzielt.

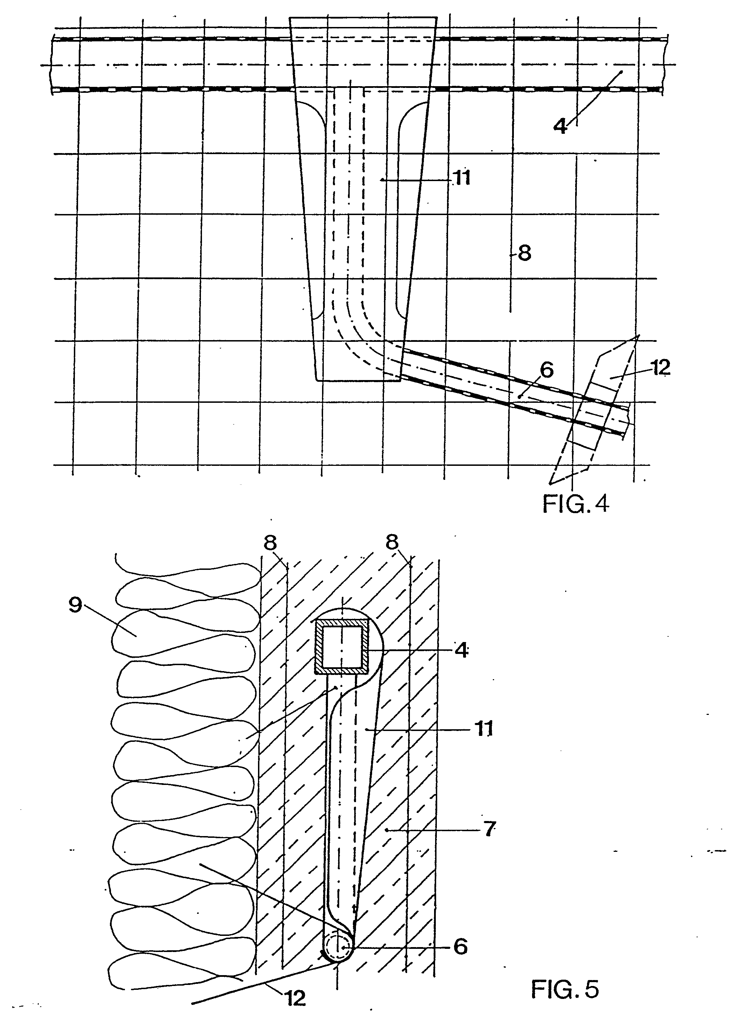

Gemäß der Fig. 4 und 5 ist im Bereich der Verbindung zwischen der Rohrschlange 6 und dem oberen Sammelrohr 4 eine, z.B. aus Blech gefertigte Abdeckung 11 vorgesehen, um infolge thermisch bedingter Längenänderungen des Sammelrohres 4 auftretende Verlagerungen des Anschlusses der Rohrschlangen 6 trotz des einbettenden Plattenmaterials 7 zu ermöglichen. Das Plattenmaterial 7 wird damit von dem Anschluß der Rohrschlange ferngehalten. Das, vorliegend rechteckigen Querschnitt aufweisende Sammelrohr 4, sowie die Rohrschlange 6 kann eine ein Haften des Plattenmaterials unterbindende Beschichtung aufweisen. Solcherart kann der Anschluß der Rohrschlange 6 die Längsbewegung des Sammelrohres kompensieren. Die Schalenförmige oder flache Abdeckung 11, die auch nach dem Anschlußbereich der Rohrschlange 6 fortgesetzt sein kann, wird zur Befestigung an den Rohren z.B. aufgesteckt, angehängt oder mittels Lötung oder Klebung mit diesem verbunden. Die Rohrschlange 6 ist mit Haltebügel 12, die bis in die Isolierung 9 der Wandplatte reichen, festgelegt.

Die Sammelrohre 4, 5 einzeiner Wandplatten werden über seitliche Rohrkupplungen i3 miteinander verbunden, womit ganze Heizwände erzielt werden.

## Patentansprüche

1. Als Wärmetauscher wirkende, selbsttragende Wandplatte für mit flüssigem Wärmeträger betriebene Wandheizung, wobei in die eine isolierende Rückseite aufweisende Wandplatte wenigstens eine vom Wärmeträger durchflossene Rohrschlange eingebettet ist, dadurch gekennzeichnet, daß in die Wandplatte (1) zusätzlich horizontale Sammelrohre (4, 5) eingebettet sind, welche seitliche Rohrkupplungen (13) aufweisen und mit den Rohrschlangen (6) unlösbar verbunden sind, wobei die Sammelrohre (4, 5) untereinander innerhalb der Wandplatten frei von direkten vertikalen, von Wärmeträgern durchflossenen Verbindungsrohren sind, und wobei in der Wandplatte zusätzlich von den Sammelrohren (4, 5) und den Rohrschlangen (6) gesonderte mechanische Träger (8), z.B. ein Flächentragwerk, vorgesehen sind.

2. Wandplatte nach Anspruch 1, dadurch gekennzeichnet, daß als Flächentragwerk orientierungslos verteilt angeordnete Fasern in das Plattenmaterial eingebettet sind.

3. Wandplatte nach Anspruch 1, dadurch gekennzeichnet, daß das Flächentragwerk durch ein- oder beidseits der Rohrschlangen (6) und der Sammelrohre (4, 5) in das Plattenmaterial (7) eingebettete netzartige Träger (8) gebildet ist.

4. Wandplatte nach einem der Ansprüche 1 bis 3, dadurch gekennzeichnet, daß die Rohrschlangen (6) zickzackartig verlaufend und ineinandergreifend ausgebildet sind.

5. Wandplatte nach einem der Ansprüche 1 bis 4, dadurch gekennzeichnet, daß die Rohrschlange (6) in die Isolierung (9) der Wandplatte (1) reichende und dort verankerte Haltebügel (12) aufweist.

6. Wandplatte nach einem der Ansprüche 1 bis 5, dadurch gekennzeichnet, daß die Verbindungszone zwischen Sammelrohr (4, 5) und Rohrschlange (6) eine bis zum Bogenteil der Rohrschlange reichende Abdeckung (11) aufweist.

## Claims

1. A self-supporting wall panel functioning as a heat exchanger for wall heating and operated with a liquid heat transfer medium, in which a wall panel having an insulating rear side has embedded therein at least one serpentine pipe through which the heat transfer medium lows, characterised by the fact that horizontal collecting pipes (4, 5) having lateral pipe couplings (13) that are permanently fastened to the serpentine pipes (6), are additionally embedded within the panel (1), such that the collecting pipes (4, 5) within the wall panel are free from direct, vertical linking pipes carrying the heat transfer medium, and such that the wall panel is, in addition, provided with mechanical support (8), e.g., a plane load-bearing structure, separate from the collecting pipes (4, 5) and the serpentine pipes (6).

2. A wall panel according to claim 1, characterised by the fact that fibres arranged in a non-oriented distribution are embedded in the panel material as the plane load -bearing structure.

3. A wall panel according to claim 1, characterised by the fact that on one or both sides of the serpentine pipes (6) and the collecting pipes (4, 5) embedded in the panel material (7) the plane load-bearing structure (8) is formed out of latticed supports.

4. A wall panel according to any of claims 1 to 3, characterised by the fact that the serpentine pipes (6) run in a zig-zag, interlocking fashion.

5. A wall panel according to any one of claims 1 to 4, characterised by the fact that the serpentine pipe (6) has shackles (12) penetrating into the insulation (9) of the wall panel (1) in which they are anchored.

6. A wall panel according to any one of claims 1 to 5, characterised by the fact that the fastening area between collecting pipes (4, 5) and serpentine pipes (6) has a cover (11) reaching as far as the bent part of the serpentine pipes.

## Revendications

1. Panneau mural autoporteur jouant le rôle d'échangeur de chaleur, pour chauffage mural fonctionnant avec un agent caloporteur fluide, un serpentin au moins, parcouru par l'agent caloporteur, étant incorporé dans le panneau mural comportant une face postérieure isolante, caractérisé en ce que des tubes collecteurs (4, 5) horizontaux qui comportent des raccords latéraux (13) et sont reliés de façon inamovible aux serpentins (6) sont incorporés, en plus, dans le panneau mural (1), les tubes collecteurs (4, 5) étant mutuellement dépourvus, à l'intérieur des panneaux muraux, de tubes de liaison directs verticaux parcourus par l'agent caloporteur, et en ce que des supports mécaniques (8), par exemple une structure porteuse plane, distincts des tubes collecteurs (4, 5) et des serpentins (6), sont prévus en plus dans le panneau mural.

2. Panneau mural selon la revendication 1, caractérisé en ce que, pour constituer la structure porteuse plane, des fibres disposées selon une distribution sans orientation sont incorporées dans le matériau constituant le panneau.

3. Panneau mural selon la revendication 1, caractérisé en ce que la structure porteuse plane est constituée par des supports réticulés (8) incorporés dans le matériau (7) constituant le panneau d'un côté ou des deux côtés des serpentins (6) et des tubes collecteurs (4, 5).

4. Panneau mural selon l'une des revendications 1 à 3, caractérisé en ce que les serpentins ont une allure en zig-zag et s'emboîtent.

5. Panneau mural selon l'une des revendications 1 à 4, caractérisé en ce que le serpentin (6) comporte des armatures de fixation en étrier (12) pénétrant dans la couche isolante (9) et ancrées dans celle-ci.

6. Panneau mural selon l'une des revendications 1 à 5, caractérisé en ce que la zone de liaison entre tubes collecteurs (4,5) et serpentin (6) comporte un revêtement (11) allant jusqu'à la partie arquée du serpentin.

0 051 713

FIG.1

0 051 713

FIG.2

3

FIG. 3

0051 713

0 051 713

FIG. 4

FIG. 5